# EUROPEAN PATENT APPLICATION

(11) **EP 2 886 172 A1**
(43) Date of publication of application: **24.06.2015**
(21) Application number: 13198230.8
(22) Date of filing: 18.12.2013
(51) Int. Cl.: A63F 13/213, A63F 13/20, G06F 3/01, A63F 13/25, A63F 13/00, A63F 13/216, A63F 13/30

(54) **Mixed-reality arena**

(71) Applicant: Microsoft Technology Licensing, LLC, Redmond, WA 98052 (US)
(72) Inventor: Latta, Stephen, Redmond WA 98052-6399 (US); McCulloch, Daniel, Redmond WA 98052-6399 (US); Tsunoda, Kudo, Redmond WA 98052-6399 (US); Krauss, Aaron, Redmond WA 98052-6399 (US)
(74) Representative: Grünecker Patent- und Rechtsanwälte PartG mbB

(57) **Abstract**

A computing system (101) comprises a see-through display device (102), a logic subsystem (702), and a storage subsystem (704) storing instructions. When executed by the logic subsystem, the instructions display on the see-through display device a virtual arena (110), a user-controlled avatar (112), and an opponent avatar (114). The virtual arena appears to be integrated within a physical space (104) when the physical space is viewed through the see-through display device. In response to receiving a user input, the instructions may display on the see-through display device an updated user-controlled avatar.

## Description

### BACKGROUND

Fighting games are frequently displayed as a pre-defined fighting environment on a two-dimensional, stationary display of a video gaming system. Users typically provide control for the fighting game with a video game controller connected to the video game system.

### SUMMARY

Embodiments are disclosed herein for providing a mixed-reality fighting game in a computing system. For example, a computing system may comprise a see-through display device, a logic subsystem, and a storage subsystem storing instructions that, when executed by the logic subsystem, display on the see-through display device a virtual arena, a user-controlled avatar, and an opponent avatar, the virtual arena integrated within a physical space when the physical space is viewed through the see-through display device. In response to receiving a user input, the instructions may also display on the see-through display device an updated user-controlled avatar based on the user input.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1A shows a top view of a user wearing a see-through display device in a physical space.
FIG. 1B shows an unaltered first-person perspective of the user of FIG. 1A.
FIG. 1C shows a first-person perspective of the user of FIG. 1A while the see-through display device augments reality to display a virtual arena.
FIG. 2 shows an example augmentation of a physical space in a third person view in accordance with an embodiment of the present disclosure.
FIG. 3 shows an example augmentation of a physical space in a first person view in accordance with an embodiment of the present disclosure.
FIG. 4 illustrates an example opponent computing system providing a fighting game in accordance with an embodiment of the present disclosure.
FIG. 5 shows an example method of integrating a virtual arena into a physical space in accordance with an embodiment of the present disclosure.
FIG. 6 shows an example head-mounted display in accordance with an embodiment of the present disclosure.
FIG. 7 is an example computing system in accordance with an embodiment of the present disclosure.

### DETAILED DESCRIPTION

Fighting games often are implemented as two-dimensional, pre-defined virtual environments that have little to no connection to the real world. These games limit a level of immersion that a user may experience and tether the user to a stationary screen and video gaming system. Thus, the disclosed embodiments are directed to a fighting game that brings a user "ring-side" or even directly into the fight by incorporating the fight into a physical environment of the user. For example, as described in more detail below, by displaying a virtual arena and one or more avatars on a see-through display, the virtual arena and avatars may be integrated into the physical environment of the user. Such integration may allow a user to interact with the physical environment in order to provide control for a user-controlled avatar within the fighting game.

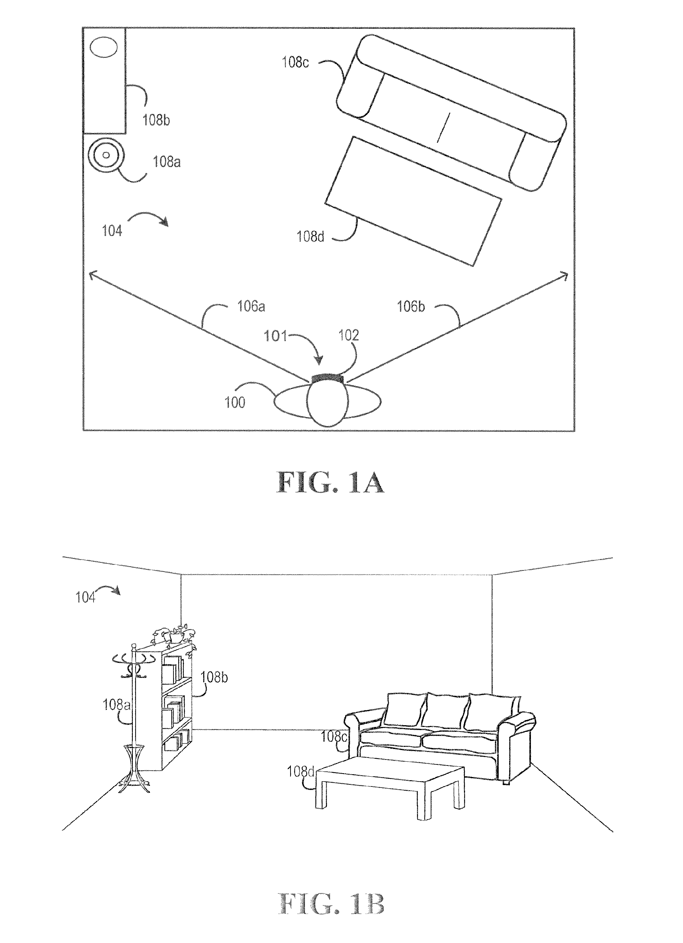

FIG. 1A schematically shows a top view of a user 100 utilizing a computing system 101 including a see-through display device 102 within a physical space 104. As used herein, the term physical space may refer to a real world physical environment of user 100, such as a room. Likewise, a physical location may refer to a location of a user, real world object, and/or virtual object within the physical space. A physical space may include virtually any indoor or outdoor environment. Lines 106a and 106b indicate the field of view of the user through the see-through display device. FIG. 1A also shows real world objects 108a, 108b, 108c, and 108d within physical space 104 that are in the field of view of user 100.

FIG. 1B shows a first-person perspective of user 100 viewing real world objects 108a, 108b, 108c, and 108d through see-through display device 102. In FIG. 1B, the see-through display device is not visually presenting virtual objects. As such, the user is only able to see the real world objects. The user sees such real world objects because light reflecting from the real world objects is able to pass through the see-through display to the eyes of the user.

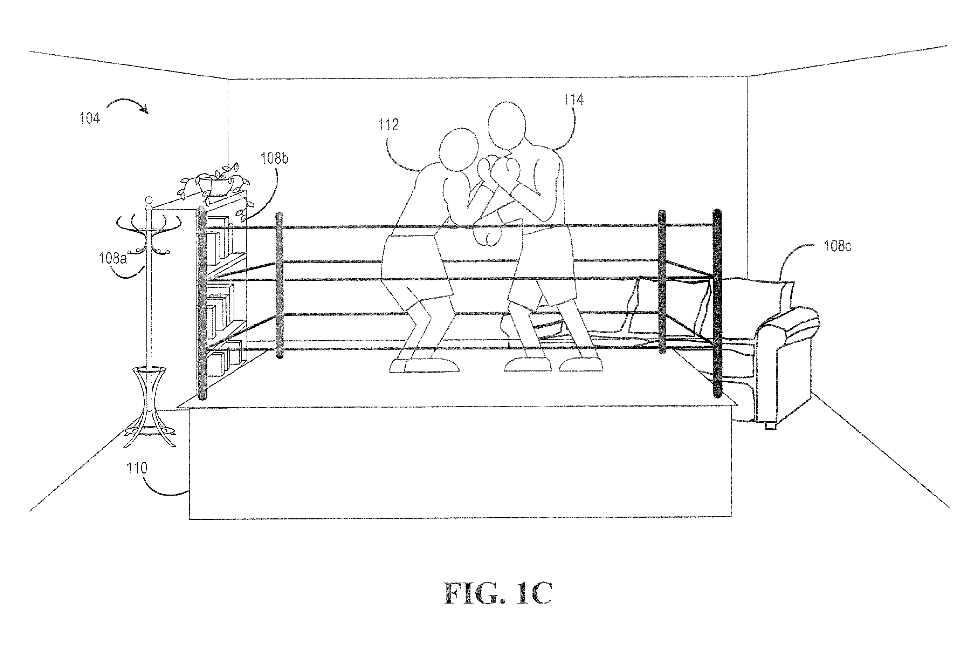

Computing system 101 may be configured to provide a mixed-reality fighting game. For example, FIG. 1C shows the same first-person perspective of the user 100 as FIG. 1B, but with the see-through display device visually presenting virtual objects corresponding to a mixed-reality fighting game. In particular, the see-through display device 102 is displaying a virtual arena 110, a user-controlled avatar 112, and an opponent avatar 114. From the perspective of the user, the virtual arena and the avatars appear to be integrated with the physical space 104.

In particular, FIG. 1C shows virtual arena 110 rendered to appear as if the virtual arena is placed on the floor of the room. For example, virtual arena 110 is rendered to fully obscure real world object 108d and partially obscure real world objects 108a, 108b, and 108c. Further, avatars 112 and 114 are rendered to appear as if the avatars are standing within the virtual arena.

Virtual arena 110, user-controlled avatar 112, and opponent avatar 114 are provided as non-limiting examples. Virtual arenas and avatars may be rendered to have virtually any appearance without departing from the scope of this disclosure. Further, additional or alternative virtual objects may be displayed on see-through display device 102 and appear to be integrated into physical space 104.

In order to integrate virtual arena 110 into physical space 104, see-through display device 102 may image, via one or more image sensors, the physical space. The physical space may include one or more topographical features that define a surface shape and other characteristics of the physical space. Information pertaining to these features may be used, for example, to determine a suitably open or flat area to place a virtual arena.

In some embodiments, information about the physical space may be detected by various sensors of computing system 101, including see-through display device 102, and/or an external computing system such as an opponent computing system. For example, computing system 101 may identify features of the physical space by using surface reconstruction, room mapping, location scrvices, etc. In one example, a location of the physical space may be determined via GPS, cell triangulation, a global coordinate system provided by a network service, etc. Computing system 101 may receive, from a server in one example, information about the physical space based on the determined location of the physical space. In some embodiments, computing system 101 may include a depth camera. The depth camera may image, via an image sensor, physical space 104 including one or more topographical features. The depth camera may also determine depth values for objects, such as objects 108a, 108b, 108c, and 108d (and the individual pixels that make up such objects), in physical space 104.

Computing system 101 may utilize the information relating to topographical and other features of the physical space in order to identify open areas within the physical space. See-through display device 102 may display, on a see-through display, a virtual arena that is integrated within a physical space when the physical space is viewed through the see-through display device. In some embodiments, the see-through display device displays the virtual arena with one or more interactive elements integrated with one or more objects in the physical space. Computing system 101 may identify real objects within physical space 104 that may be visually augmented to serve as mixed-reality interactive elements. For example, a virtual arena may include a virtual boulder that is integrated with a park bench in the physical space. In this example, the park bench provides physical structure but appears to be boulder. In another example, computing system 101 may identify a wall that can be augmented to serve as a virtual fence or virtual ropes of a boxing ring.

In some embodiments, the virtual arena may define an "in bounds" area as an area inside of the virtual arena. In these embodiments, areas outside of the virtual arena may be considered "out of bounds." For example, one or more physical and/or virtual objects may be virtually broken within an "in bounds" region, while no physical and/or virtual objects may be virtually broken within an "out of bounds" region. In alternative embodiments, fighting can venture outside of an arena, in which case an entire physical space is considered "in bounds."

Virtual arena 110 may be configured automatically by computing system 101. In some embodiments, the virtual arena may be sized and positioned based on the one or more topographical features of the physical space. Additional features of the arena, such as shape, terrain, obstacles, etc., may be configured based on features of the physical space (e.g., as identified by a depth camera of the computing system). For example, a virtual arena may be sized and positioned so that a floor of the virtual arena integrates with the ground and/or floor of a physical space. In other examples, the arena may be sized and positioned so that a floor of the arena is above the ground and/or floor of the physical space to resemble an elevated arena such as a boxing ring.

Computing system 101 may automatically detect an open area of physical space 104 and scale the virtual arena to fit the open area. For example, the open area may be defined as a physical space having a minimal amount of obstacles such that the virtual arena is sized and positioned to occupy a location of the physical space having fewer objects than an object threshold. In alternative examples, the open area may be defined by any suitable method. For example, the open area may be defined as a physical space having the largest number of physical objects that may accommodate an interactive virtual object.

In additional or alternative embodiments, the virtual arena may be scaled as an upwardly bounded function of the physical space. The upward bound may indicate a maximum arena parameter, such as a maximum arena size. The maximum arena size may be selected, for example, so that the arena will not appear to be greater than life-sized. The maximum arena size may be constrained by a maximum width, depth, and/or height. In some embodiments, the virtual arena may be scaled as a function of the size of the physical space with an upward limit to the size. For example, the virtual arena may be scaled to occupy as much of the physical space as possible without exceeding a maximum arena size, such as a life-sized arena. In an additional or alternative embodiment, the virtual arena may be scaled to occupy a specified amount of the physical space without exceeding an upward bound. In another embodiment, the virtual arena may be scaled as a function of parameters of the physical space, such as size, topographical features, objects within the physical space, etc., up to an upward bound. In other words, in one example, a maximum arena size may be defined, and the arena may be scaled to either fit the physical space or meet the maximum arena size, whichever limit is reached first.

In one specific example of an upwardly-bounded function, a maximum arena size may be 20 feet x 20 feet. If an arena is placed in a room having an open area measuring 10 feet x 10 feet, the arena may be scaled such that it appears to measure 10 feet x 10 feet. Alternately, if the arena is placed in a room having an open area measuring 30 feet x 30 feet, the arena may be scaled such that it appears to measure 20 feet x 20 feet, as this is the maximum size defined for the arena. However, the arena may be scaled as other upwardly-bounded functions without departing from the scope of this disclosure.

In other embodiments, the arena may be configured by a user such that one or more parameters of the virtual arena are selected by a user. For example, the user may select a size, position, orientation, shape, etc. of the virtual arena by providing a user input. In some embodiments, a user may point to a location in the room and a selected virtual arena may be placed at that location. The virtual arena may have an altered appearance during configuration to indicate that the virtual arena is being customized. Upon confirming parameters of the virtual arena, the appearance of the virtual arena may change to indicate that configuration is complete. The virtual arena may also be positioned modularly such that the user selects a location for various bounds of the virtual arena until a virtual arena is defined. For example, a user may point at a location for each boundary point of a modular virtual arena to define the bounds of the virtual arena.

In some embodiments, any parameters of the virtual arena that are not selected by a user may be automatically configured by the computing system 101. For example, the user may select a position for a selected pre-defined virtual arena and/or a user may select one of a plurality of pre-defined virtual arenas. In some examples, pre-defined virtual arenas may define one or more parameters. For example, a pre-defined virtual arena may have a particular shape and be scaled to fit the room. In another example, the pre-defined virtual arena may have a particular size and be positioned within a location of the physical space that accommodates the virtual arena. In further embodiments, a user may select which objects in the real world are interactable within the virtual arena.

A virtual arena may be completely enclosed, with boundaries defining a closed region of virtual space and/or physical space. In alternative embodiments, a virtual arena may be open on one or more ends and/or may occupy disparate regions of a physical space. For example, portions of the virtual arena may be separated by obstacles to simulate fighting atop elevated platforms separated by virtual abysses. In further embodiments, a virtual arena may be unbounded, such that the virtual arena may occupy all physical space viewed by the user through a see-through display device.

Computing system 101 may display, via see-through display device 102, one or more avatars within the virtual arena. In some embodiments, the one or more avatars may be scaled as an upwardly bounded function of the physical space. As described in more detail above, the upwardly bounded function may define the scaling such that the avatars have a size based on the size of the physical space up to a maximum size (e.g., appears to be life-sized). The upwardly bounded function for the avatar may be different than the upwardly bounded function for the arena such that the avatar is scaled independently from the arena. Alternatively, the upwardly bounded function for the avatar may be the same as the upwardly bounded function for the arena such that the avatar is scaled in the same manner as the arena. For example, the avatars may have an independently-defined maximum size. Alternatively, the avatars may have a maximum size equal to or derived from the maximum size of the arena. Further, each avatar may have independent upwardly bounded functions, such that each avatar is scaled independently from one another and/or the arena. Alternatively, each avatar may share one or more elements of an upwardly bounded function. For example, each avatar may have the same maximum size.

The avatars may include a user-controlled avatar and one or more opponent avatars. The user-controlled avatar may be controlled by the user in any suitable manner. The one or more opponent avatars may be controlled by other users and/or artificial in-game intelligence.

In some embodiments, a fighting game may include teams, whereby two or more users fight one or more opponents in a cooperative manner. In alternative embodiments, a fighting game may be an open battle royale, in which each player fights each other player.

In some embodiments, an appearance of the user-controlled avatar may be pre-defined or selected from a plurality of pre-defined user-controlled avatar appearances. In other embodiments, an appearance of the user-controlled avatar may be derived from an appearance of a user providing the user input. For example, a user may be imaged by camera(s), such as a depth camera and/or a color camera, and one or more physical features of the user may be mapped to the user-controlled avatar.

A user may provide user input to control the user-controlled avatar and/or other elements of the fighting game. In response to receiving a user input, computing system 101 may display on see-through display device 102 an updated user-controlled avatar based on the user input. For example, an offensive move, such as a kick or punch, may be indicated by a user input, and in response the see-through display may display the user-controlled avatar performing the offensive move.

In some embodiments, an updated image can be used to display the user-controlled avatar in a new position, orientation, pose, etc. In additional or alternative examples, the updated user-controlled avatar may be animated to illustrate a command indicated by the user input.

The user may provide user input indicating one or more commands such as move commands, offensive or defensive commands, camera control commands to modify a view of the virtual arena, game commands such as ending the fight, etc. For example, offensive commands may include various fighting moves, such as punches, kicks, virtual magic attacks such as fireballs, etc. An offensive command may also include a combo move, in which a sequence of user inputs are received and the see-through display device displays an updated user-controlled avatar that performs an enhanced offensive move

The user input may be received via a plurality of methods and devices to control the user-controlled avatar. In some embodiments, the user input may be received via a voice command provided to one or more sound capturing devices. In these embodiments, a microphone may detect voice commands from the user to provide the user input. For example, the user may act as a virtual coach by commanding the user-controlled avatar with voice commands such as "Punch," "Dodge left," "Move forward," etc. In some embodiments, the user input may be received via a game controller. For example, the user may provide input by actuating one or more buttons, joysticks, flippers, switches, etc. of a game controller. In some embodiments, the user input may be received via a spatial location detector (e.g., an inertial measurement unit). For example, the inertial measurement unit may be attached to one or more locations of a user to detect and interpret movement of the one or more locations of a user. For example, an inertial measurement unit may be attached to a user's finger to detect a punch movement by the hand of the user.

In some embodiments, the user input may be received via a gesture input detection device configured to observe a gesture of a user providing the user input. For example, a user may perform a gesture, such as a punching move, that is detected by a gesture input detection device. A gesture input detection device may include one or more devices capable of detecting and recognizing gestures. For example, the gesture input detection device may include a color camera, a depth camera, an accelerometer, an inertial measurement unit, a touch-sensitive device, etc. In some embodiments, a gesture may be detected by a camera of an opponent see-through display device. In another embodiment, user input may be received via an eye-tracking detection device that determines and recognizes eye movements of a user. For example, an inward-facing camera of a see-through display device may detect a gaze of a user.

In some embodiments, a plurality of devices may be used simultaneously to provide the user input. For example, a user may wear an inertial measurement unit to detect a punching movement while providing a voice command to "Move forward." Accordingly, the user-controlled avatar may perform a punching move while moving forward. Further, a single device may include multiple user input-capturing capabilities. For example, a game controller may include an accelerometer to recognize particular gestures. Therefore, a user may utilize the game controller to provide user input via depressible buttons as well as gestures.

The user may view and participate in the fight with a plurality of views and perspectives. For example, a view and/or perspective may be chosen for the user based on the physical space. In another example, the user may select a preferred view and/or perspective. In some embodiments, the user may dynamically switch between views and/or perspectives. In alternative or additional embodiments, the system may dynamically switch between views and/or perspectives automatically in response to movement of one or more of the avatars or the user.

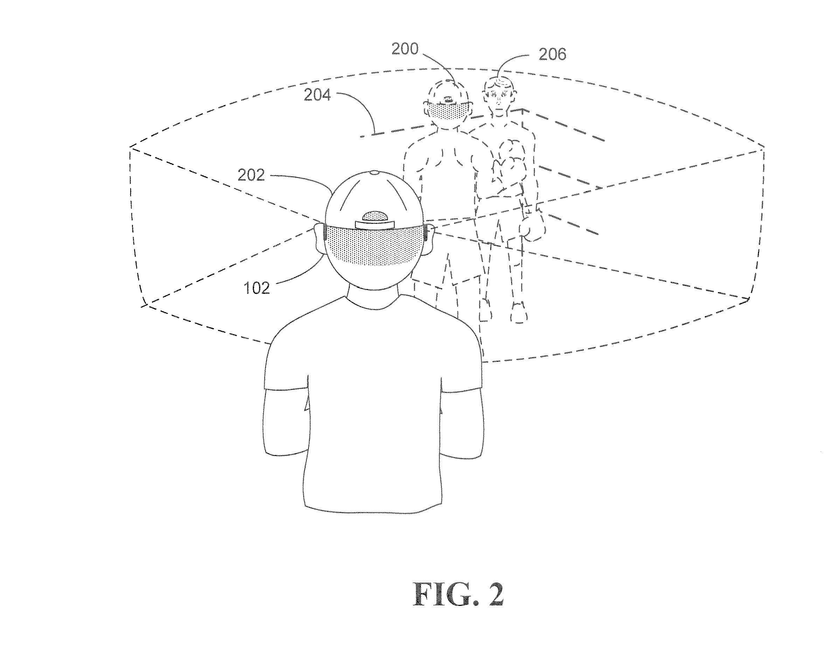

FIG. 2 illustrates an example of a first view that is a third person, "ring-side" view. In the third person view, a user-controlled avatar 200 may be positioned in front of the user 202 when viewed through see-through display device 102. Virtual arena 204, user-controlled avatar 200, and opponent avatar 206 are illustrated with dashed lines to represent a virtual environment.

In the view illustrated in FIG. 2, a position of user-controlled avatar 200 may be dynamically updated based on a position of user 201 providing the user input to control the user-controlled avatar in some embodiments. In other words, the third person view may have a fixed perspective such that the user-controlled avatar is maintained at the same orientation and/or position relative to the user. For example, the user-controlled avatar may maintain a position in front of the user. In some examples, the fixed perspective may result in the see-through display device displaying the user-controlled avatar with its back to the user. In this arrangement, the user may provide gestures or controls that are directly mimicked by the user-controlled avatar. For example, if the user toggles a joystick to the right, the see-through display may display an updated user-controlled avatar that has moved to the avatar's right. In other examples, the fixed perspective may result in the see-through display device displaying the user-controlled avatar with its front to the user. In this arrangement, the user may provide gestures that are mirrored by the user-controlled avatar. For example, if the user toggles a joystick to the right, the see-through display may display an updated user-controlled avatar that has moved to the avatar's left.

In some embodiments, a position of the user-controlled avatar may be updated independently from a position of the user when the user has a third person view of the fight. In other words, the third person view may have a dynamic perspective. For example, a user may move around the arena while the position and orientation of the user-controlled avatar and/or arena remains the same. Such an arrangement may allow a user to acquire a desired perspective during the fight. For example, the user may move around the arena to view the fight from different angles to identify possible fighting strategies.

As described above, a user-controlled avatar may be viewed from a third person perspective. In other words, the avatar the user controls is physically separated from the user. In other embodiments, the user-controlled avatar may be implemented as an overlay of the user.

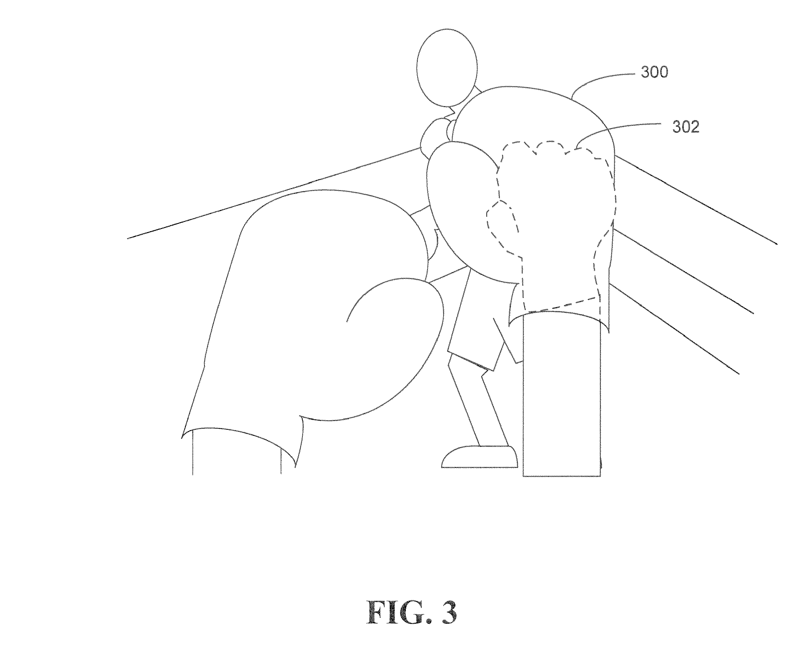

For example, FIG. 3 shows an example of a first person view as viewed through see-through display device 102. In the first person view, the see-through display augments reality to change the appearance of the user. In this view, costume elements such as boxing gloves 300 and/or boxing shorts may overlay hands 302 and/or legs of a user when the hands 302 and/or legs are viewed through see-through display device 102. In other words, the see-through display may augment the appearance of the user by displaying features of the user-controlled avatar as an overlay of corresponding features of the user.

A first person view may feature a fixed or dynamic perspective, as described in more detail above. The dynamic perspective for this view may be utilized to allow control of movement of the user-controlled avatar in small physical spaces. For example, a user may change a virtual position of the user-controlled avatar through a particular user input without changing his or her physical position.

In any view or perspective, the user-controlled avatar may be displayed with a pose that is based on a pose of the user providing user input. Alternatively, the user-controlled avatar may be displayed with a pose that is independent from a pose of the user providing user input.

Opponent avatars, such as opponent avatar 114 of FIG. 1C, may be controlled by AI (artificial intelligence) provided by a computing device. Opponent avatars may also be controlled by opponent users providing opponent user input. For example, in some embodiments, an opponent user may be located in the same physical space as the main user. In this embodiment, the opponent user may be viewing a representation of the virtual arena as it is displayed on a see-through display device of the opponent. The opponent see-through display device may display the representation of the virtual arena in the same location of physical space as the virtual arena displayed by the see-through display device of the main user, so that both users perceive the arena and the avatars in the same physical location.

In some embodiments, an opponent user may be located in a different physical space from the main user. For example, the opponent user may be viewing a representation of the virtual arena with a see-through display device. In this way, the different see-through displays are used to create the illusion of the same arena and avatars in two different physical spaces.

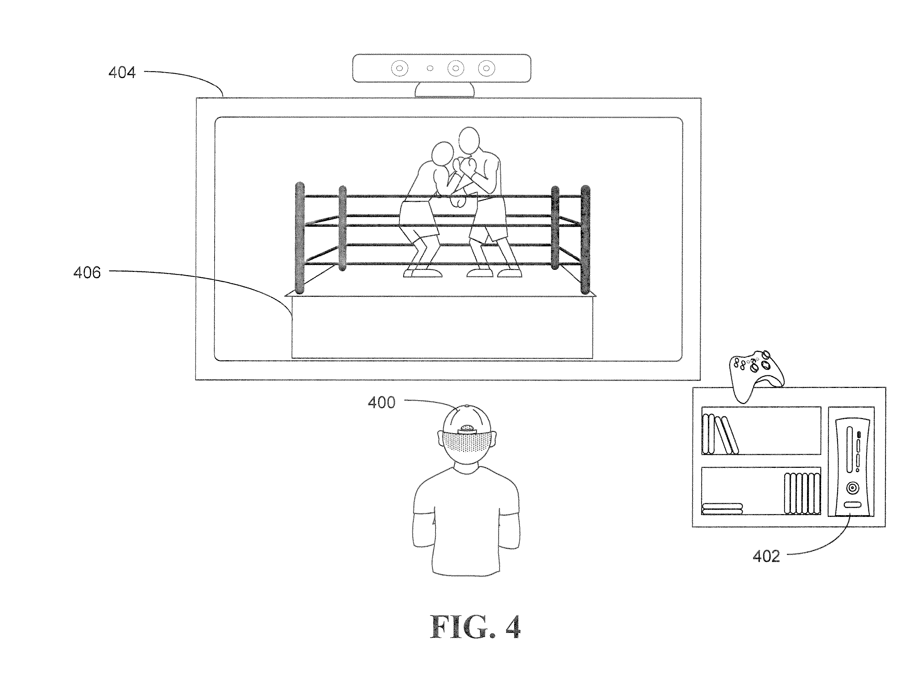

As another example, the opponent user may view a representation of the virtual arena with a stationary display (e.g., television or computer display). For example, FIG. 4 illustrates an opponent 400 participating in a fight via a computing system such as a video game system 402 and viewing the fight using an opponent stationary display 404.

In some embodiments, a virtual arena may be configured by a main user and placed in a location of the physical space corresponding to the main user. Information relating to the parameters of the arena, the physical space, and one or more avatars may then be sent to the video game system 402. A representation of the virtual arena 406 displayed on the opponent stationary display 404 may then reflect the characteristics of the physical space of the main user. In alternative embodiments, the virtual arena may be configured and positioned within a location of physical space corresponding to the opponent user. Information relating to the parameters of the arena, physical space, and one or more avatars may then be sent to the see-through display of the main user. The see-through display of the main user may display a representation of the virtual arena that reflects the characteristics of the physical space of the opponent.

When engaging in real-time multiplayer scenarios as described above, differences between the physical spaces of two or more users may be accommodated by mapping the physical characteristics of the physical spaces to one another. For example, a main user physical space may be selected to house the arena. Accordingly, in some embodiments, virtual objects representing physical objects within the main user physical space may be virtually incorporated into opponent physical spaces. For example, a table that is located in the main user physical space may be displayed on an opponent see-through display device in a corresponding location of the opponent physical space. In other embodiments, only physical objects that are represented by interactive victual objects may be displayed on an opponent see-through display device.

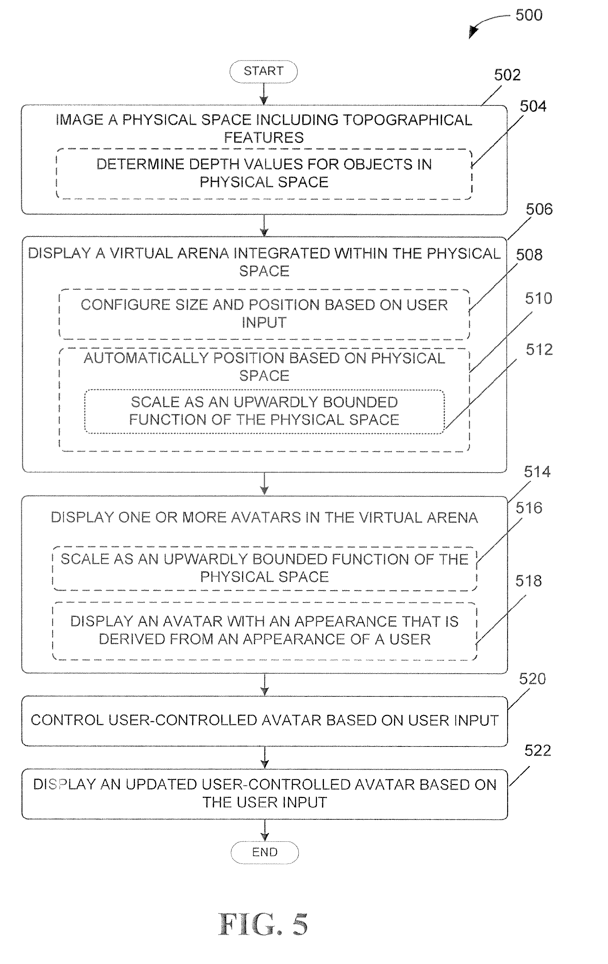

Fig. 5 shows an example method 500 of integrating a virtual arena into a physical space in accordance with an embodiment of the present disclosure. At 502, method 500 includes imaging a physical space including topographical features. In some embodiments, features of the physical space may be further identified by determining depth values for objects within the physical space at 504. At 506, method 500 includes displaying a virtual arena that is integrated within the physical space. In one example, the size and position of the virtual arena may be configured based on user input at 508. In additional or alternative examples, a computing system may automatically position the virtual arena based on the physical space at 510. The automatic positioning may include scaling the virtual arena as an upwardly bounded function of the physical space at 512.

At 514, method 500 includes displaying one or more avatars in the virtual arena. In one example, the avatars may be scaled as an upwardly bounded function of the physical space at 516. At 518, the avatar may be displayed with an appearance that is derived from an appearance of a user. At 520, method 500 includes controlling a user-controlled avatar based on user input. Next, at 522, method 500 includes displaying an updated user-controlled avatar based on the user input.

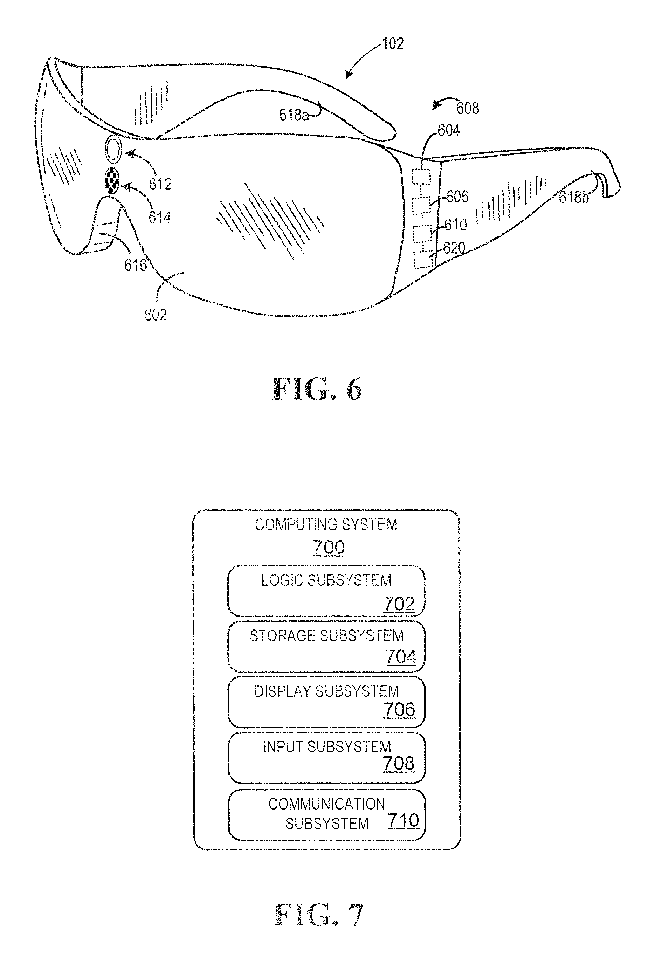

FIG. 6 shows a non-limiting example of a see-through display device 102 including a see-through display 602. For example, see-through display device 102 may be a head-mounted see-through display device. See-through display 602 is at least partially transparent, thus allowing light to pass through the see-through display to the eyes of a user. Furthermore, the see-through display is configured to visually augment an appearance of a physical space to a user viewing the physical space through the see-through display. For example, the see-through display may display virtual objects that the user can see when the user looks through the see-through display. As such, the user is able to view the virtual objects that do not exist within the physical space at the same time that the user views the physical space. This creates the illusion that the virtual objects are part of the physical space.

See-through display device 102 also includes a virtual reality engine 604. The virtual reality engine 604 may be configured to cause the see-through display to visually present a virtual object in the form of a virtual arena, one or more avatars, or other virtual objects. The virtual objects can simulate the appearance of real world objects. To a user viewing the physical space through the see-through display, the virtual objects appear to be integrated with the physical space. For example, the virtual objects and/or other images displayed via the see through display may be positioned relative to the eyes of a user such that the displayed virtual objects and/or images appear, to the user, to occupy particular locations within the physical space. In this way, the user is able to view objects that are not actually present in the physical space. Virtual reality engine may include software, hardware, firmware, or any combination thereof.

See-through display device 102 may include a speaker subsystem 606 and a sensor subsystem 608. The sensor subsystem may include a variety of different sensors in different embodiments. As non-limiting examples, a sensor subsystem may include a microphone 610, one or more forward-facing (away from user) infrared and/or visible light cameras 612, and/or one or more rearward-facing (towards user) infrared and/or visible light cameras 614. The forward-facing camera(s) may include one or more depth cameras, and/or the rearward-facing cameras may include one or more eye-tracking cameras. In some embodiments, an onboard sensor subsystem may communicate with one or more off-board sensors that send observation information to the onboard sensor subsystem. For example, a depth camera used by a gaming console may send depth maps and/or modeled virtual skeletons to the sensor subsystem of the head-mounted display.

See-through display device 102 may also include one or more features that allow the see-through display device to be worn on the head of a user. In the illustrated example, see-through display device 102 takes the form of eye glasses and includes a nose rest 616 and ear rests 618a and 618b. In other embodiments, a head-mounted display may include a hat or helmet with an in-front-of-the-face see-through visor. Furthermore, while described in the context of a head-mounted see-through display, the concepts described herein may be applied to see-through displays that are not head mounted (e.g., a windshield) and to displays that are not see-through (e.g., an opaque display that renders real objects observed by a camera with virtual objects not within the camera's field of view).

See-through display device 102 may also include a communication subsystem 620. Communication subsystem 620 may be configured to communicate with one or more off-board computing devices. As an example, the communication subsystem may be configured to wirelessly receive a video stream, audio stream, coordinate information, virtual object descriptions, and/or other information to render a virtual arena.

In some embodiments, the methods and processes described above may be tied to a computing system of one or more computing devices. In particular, such methods and processes may be implemented as a computer-application program or service, an application-programming interface (API), a library, and/or other computer-program product.

FIG. 7 schematically shows a non-limiting embodiment of a computing system 700 that can enact one or more of the methods and processes described above. Computing system 700 is shown in simplified form. It will be understood that virtually any computer architecture may be used without departing from the scope of this disclosure. In different embodiments, computing system 700 may take the form of a head-mounted see-through display device, gaming device, mobile computing device, mobile communication device (e.g., smart phone), desktop computer, laptop computer, tablet computer, home-entertainment computer, network computing device, mainframe computer, server computer, etc.

Computing system 700 includes a logic subsystem 702 and a storage subsystem 704. Computing system 700 may optionally include a display subsystem 706 (e.g., a see-through display), input subsystem 708, communication subsystem 710, and/or other components not shown in FIG. 7.

Logic subsystem 702 includes one or more physical devices configured to execute instructions. For example, the logic subsystem may be configured to execute instructions that are part of one or more applications, services, programs, routines, libraries, objects, components, data structures, or other logical constructs. Such instructions may be implemented to perform a task, implement a data type, transform the state of one or more components, or otherwise arrive at a desired result.

The logic subsystem may include one or more processors configured to execute software instructions. Additionally or alternatively, the logic subsystem may include one or more hardware or firmware logic machines configured to execute hardware or firmware instructions. The processors of the logic subsystem may be single-core or multi-core, and the programs executed thereon may be configured for sequential, parallel or distributed processing. The logic subsystem may optionally include individual components that are distributed among two or more devices, which can be remotely located and/or configured for coordinated processing. Aspects of the logic subsystem may be virtualized and executed by remotely accessible, networked computing devices configured in a cloud-computing configuration.

Storage subsystem 704 includes one or more physical, non-transitory, devices configured to hold data and/or instructions executable by the logic subsystem to implement the methods and processes described herein. When such methods and processes are implemented, the state of storage subsystem 704 may be transformed-e.g., to hold different data.

Storage subsystem 704 may include removable media and/or built-in devices. Storage subsystem 704 may include optical memory devices (e.g., CD, DVD, HD-DVD, Blu-Ray Disc, etc.), semiconductor memory devices (e.g., RAM, EPROM, EEPROM, etc.) and/or magnetic memory devices (e.g., hard-disk drive, floppy-disk drive, tape drive, MRAM, etc.), among others. Storage subsystem 704 may include volatile, nonvolatile, dynamic, static, read/write, read-only, random-access, sequential-access, location-addressable, file-addressable, and/or content-addressable devices.

It will be appreciated that storage subsystem 704 includes one or more physical, non-transitory devices. However, in some embodiments, aspects of the instructions described herein may be propagated in a transitory fashion by a pure signal (e.g., an electromagnetic signal, an optical signal, etc.) that is not held by a physical device for a finite duration. Furthermore, data and/or other forms of information pertaining to the present disclosure may be propagated by a pure signal.

In some embodiments, aspects of logic subsystem 702 and of storage subsystem 704 may be integrated together into one or more hardware-logic components through which the functionally described herein may be enacted. Such hardware-logic components may include field-programmable gate array (FPGAs), program and application-specific integrated circuits (PASIC / ASICs), program- and application-specific standard products (PSSP / ASSPs), system-on-a-chip (SOC) systems, and complex programmable logic devices (CPLDs), for example.

The terms "program" and "engine" may be used to describe an aspect of computing system 700 implemented to perform a particular function. In some cases, program or engine may be instantiated via logic subsystem 702 executing instructions held by storage subsystem 704. It will be understood that different programs and/or engines may be instantiated from the same application, service, code block, object, library, routine, API, function, etc. Likewise, the same program and/or engine may be instantiated by different applications, services, code blocks, objects, routines, APIs, functions, etc. The terms "program" and "engine" may encompass individual or groups of executable files, data files, libraries, drivers, scripts, database records, etc.

It will be appreciated that a "service", as used herein, is an application program executable across multiple user sessions. A service may be available to one or more system components, programs, and/or other services. In some implementations, a service may run on one or more server-computing devices.

When included, display subsystem 706 may be used to present a visual representation of data held by storage subsystem 704. This visual representation may take the form of images that appear to augment a physical space, thus creating the illusion of a mixed-reality. As the herein described methods and processes change the data held by the storage subsystem, and thus transform the state of the storage subsystem, the state of display subsystem 706 may likewise be transformed to visually represent changes in the underlying data. Display subsystem 706 may include one or more display devices utilizing virtually any type of technology. Such display devices may be combined with logic subsystem 702 and/or storage subsystem 704 in a shared enclosure (e.g., a head-mounted display), or such display devices may be peripheral display devices.

When included, input subsystem 708 may comprise or interface with one or more user-input devices such as a game controller, gesture input detection device, voice recognizer, inertial measurement unit, keyboard, mouse, or touch screen. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 710 may be configured to communicatively couple computing system 700 with one or more other computing devices. Communication subsystem 710 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 700 to send and/or receive messages to and/or from other devices via a network such as the Internet.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and nonobvious combinations and sub-combinations of the various processes, systems and configurations, and other features, functions, acts, and/or properties disclosed herein, as well as any and all equivalents thereof.

## Claims

1. A computing system (101) providing a mixed-reality fighting game, the computing system comprising:
a see-through display device (102);
a logic subsystem (702);
a storage subsystem (704) storing instructions that, when executed by the logic subsystem:
display (506) on the see-through display device a virtual arena (110), a user-controlled avatar (112), and an opponent avatar (114), the virtual arena integrated within a physical space (104) when the physical space is viewed through the see-through display device; and
in response to receiving a user input, display (522) on the see-through display device an updated user-controlled avatar based on the user input.

2. The computing system of claim 1, wherein a position of the user-controlled avatar is dynamically updated based on a position of a user providing the user input.

3. The computing system of claim 1 or 2, wherein the user input is received via a gesture input detection device configured to observe a gesture of a user providing the user input.

4. The computing system of any one of claims 1 to 3, wherein a representation of the virtual arena is displayed on an opponent stationary display.

5. The computing system of any one of claims 1 to 4, wherein a representation of the virtual arena is displayed on an opponent see-through display device.

6. The computing system of any one of claims 1 to 5, further comprising a depth camera, the depth camera imaging the physical space.

7. The computing system of claim 6, wherein the see-through display device displays the virtual arena with one or more interactive elements integrated with one or more objects in the physical space when the physical space with the one or more objects is viewed through the see-through display device.

8. A method (500) for providing a mixed-reality fighting game, the method comprising:
display (506) via a see-through display device (102) a virtual arena (110), the virtual arena scaled (512) as a first upwardly bounded function of the physical space (104); and
display (514) via the see-through display device one or more avatars (112) within the virtual arena, the one or more avatars scaled (516) as a second upwardly bounded function of the physical space.

9. The method of claim 8, wherein the first upwardly bounded function is different than the second upwardly bounded function.

10. The method of claim 8 or 9, wherein the first upwardly bounded function is the same as the second upwardly bounded function.
